# EUROPEAN PATENT APPLICATION

(11) **EP 2 527 606 A2**
(43) Date of publication of application: **28.11.2012**
(21) Application number: 12168888.1
(22) Date of filing: 22.05.2012
(51) Int. Cl.: F01K 13/00, H02P 27/06

(54) **Closed energy combined cycle system and operation method thereof**

(30) Priority: 23.05.2011 TW 100117885
(71) Applicant: Shen Yang Technologies Enterprise Co., Ltd., Pingzhen City 324, Taoyuan (TW)
(72) Inventor: Tsai, Hui Yen, 10861 Taipei City (TW); Cheng, Wen-Lon, 80445 Kaohsiung City (TW); Fan, Chiu-Rong, 32750 Taoyuan County (TW); Chuang, Tien, 61453 Chiayi County (TW)
(74) Representative: Knights, Rupert

(57) **Abstract**

A closed energy combined cycle system and an operation method thereof are provided. The closed energy combined cycle system includes a power supply mechanism, used for providing a high voltage; a driving device, in which operation of the driving device is controlled by the high voltage provided by the power supply mechanism; and at least one power generation device, in which the driving device rotates the power generation device to generate power through a transmission shaft, and the power generated by the power generation device is supplied to the power supply mechanism and a load, in which the driving device rotates the transmission shaft at a high rotational speed, and the transmission shaft rotates the power generation device to generate the power. Power generation efficiency of the power generation device may be enhanced, thereby greatly improving overall efficiency of the system, and resources used by the driving device for rotating the power generation device may be reduced, thereby effectively reducing consumption of earth resources and effectively eliminating problems of earth environmental protection.

## Description

### BACKGROUND OF THE INVENTION

### Field of the Invention

The present invention relates to a closed energy combined cycle system and an operation method thereof, capable of improving power generation efficiency of a generator.

### Related Art

With continuous improvement of people's life quality, electrical appliances and power equipment (such as vehicles, ships, and airplanes) have been widely used in daily life or at work. Energy used by the electrical appliances and the power equipment is no other than petroleum, natural gas, solar energy, and nuclear energy. However, this kind of energy has problems either of running out, or of having a use technology to be overcome, or great danger in use.

A power driving mechanism (such as a steam turbine, a hydroturbine, or a turbine) transmits a motive power through a transmission shaft to a power generation device for power generation. The power driving mechanism or a power generation device has energy loss during the operation thereof, and when operating at a low rotational speed, the power generation device has a low power generation efficiency, so as to greatly lower overall efficiency of the system. Therefore, when the power generation device generates a few electric energies, the power driving mechanism requires more resources to drive the power generation device, thereby causing more problems of earth resources and environmental protection.

### SUMMARY OF THE INVENTION

The present invention is directed to a closed energy combined cycle system, in which a driving mechanism and a power generation device thereof operate at a high rotational speed, so that energy loss in the operation of the driving mechanism or the power generation device may be reduced, and power generation efficiency of the power generation device may be improved, so as to greatly improve overall efficiency of the system. Therefore, when the power generation device generates a few electric energies, resources used by the driving mechanism for driving the power generation device are reduced, thereby effectively reducing consumption of earth resources and effectively eliminating problems of earth environmental protection.

The present invention provides a closed energy combined cycle system, which includes a power supply mechanism, a driving device, and at least one power generation device.

The power supply mechanism is used for providing a high voltage.

In the driving device, operation of the driving device is controlled by the high voltage provided by the power supply mechanism.

In the at least one power generation device, the driving device rotates the at least one power generation device to generate power through a transmission shaft, and the power generated by the at least one power generation device is supplied to the power supply mechanism and a load.

The driving device rotates the transmission shaft at a high rotational speed, and the transmission shaft rotates the at least one power generation device to generate the power.

In the closed energy combined cycle system according to the present invention, the power supply mechanism includes a power storing device, a converter, a controller, and a rotational speed sensor.

The power storing device is used for providing a low voltage, in which the at least one power generation device charges the power storing device.

The converter is used for converting the low voltage provided by the power storing device into the high voltage.

The controller is used for receiving the high voltage provided by the converter, so as to control the operation of the driving device.

The rotational speed sensor is used for sensing the rotational speed of the transmission shaft, so as to generate a rotational speed signal, in which the controller controls the rotational speed of the driving device according to the rotational speed signal of the rotational speed sensor.

In the closed energy combined cycle system according to the present invention, the power storing device is one of a lead acid battery, a nickel-metal hydride battery, and a lithium battery.

In the closed energy combined cycle system according to the present invention, the converter is one of a direct current (DC)-to-DC converter and a DC-to-alternating current (AC) converter.

In the closed energy combined cycle system according to the present invention, the controller is one of an AC server, a DC server, and a frequency converter.

In the closed energy combined cycle system according to the present invention, the driving device is one of an AC motor, a DC motor, a magnetic levitation motor, and a permanent magnetic motor.

The closed energy combined cycle system according to the present invention further includes a transmission, disposed between the driving device and the transmission shaft, and used for changing the rotational speed of the driving device rotating the transmission shaft.

In the closed energy combined cycle system according to the present invention, the transmission is a continuously variable transmission (CVT) or a segment transmission.

In the closed energy combined cycle system according to the present invention, the at least one power generation device is one of an AC generator and a DC generator.

The present invention provides an operation method of a closed energy combined cycle system, in which the closed energy combined cycle system includes a power supply mechanism, a driving device, and at least one power generation device, the operation method includes the following steps.

The power supply mechanism provides a high voltage to control operation of the driving device.

The driving device rotates a transmission shaft at a high rotational speed.

The transmission shaft rotates the at least one power generation device to generate power.

The power generated by the power generation device is supplied to the power supply mechanism and a load.

In the operation method according to the present invention, a converter of the power supply mechanism converts a low voltage of a power storing device of the power supply mechanism into the high voltage.

In the operation method according to the present invention, a rotational speed sensor of the power supply mechanism senses the rotational speed of the transmission shaft, and a controller of the power supply mechanism controls the operation of the driving device according to the rotational speed signal of the rotational speed sensor.

In the operation method according to the present invention, a transmission of the closed energy combined cycle system changes the rotational speed of the driving device rotating the transmission shaft.

In the operation method according to the present invention, the at least one power generation device charges a power storing device of the power supply mechanism.

### BRIEF DESCRIPTION OF THE DRAWINGS

FIG. 1 is a system architecture diagram of a closed energy combined cycle system according to the present invention;
FIG. 2 is a schematic view of connection relations of a transmission, a motor, and a transmission shaft according to the present invention; and
FIG 3 is a system architecture diagram of another closed energy combined cycle system according to the present invention.

### DETAILED DESCRIPTION OF THE EMBODIMENTS

A closed energy combined cycle system according to the present invention includes a power supply mechanism, a driving device, and at least one power generation device. The power supply mechanism is used for providing a high voltage, and operation of the driving device is controlled by the high voltage provided by the power supply mechanism. The driving device rotates the at least one power generation device to generate power through a transmission shaft, and the power generated by the at least one power generation device is supplied to the power supply mechanism and a load, in which the driving device rotates the transmission shaft at a high rotational speed and the transmission shaft rotates the at least one power generation device to generate the power.

The driving device rotates the at least one power generation device to generate the power at the high rotational speed through the transmission shaft, and the at least one power generation device at the high rotational speed has a higher power generation efficiency. Therefore, when the power generation device generates a few electric energies, the driving device can reduce the electric energies used for rotating the power generation device through the transmission shaft, thereby improving the power generation efficiency of the closed energy combined cycle system.

A structure and an operation method of the closed energy combined cycle system according to the present invention are further described hereinafter through an embodiment.

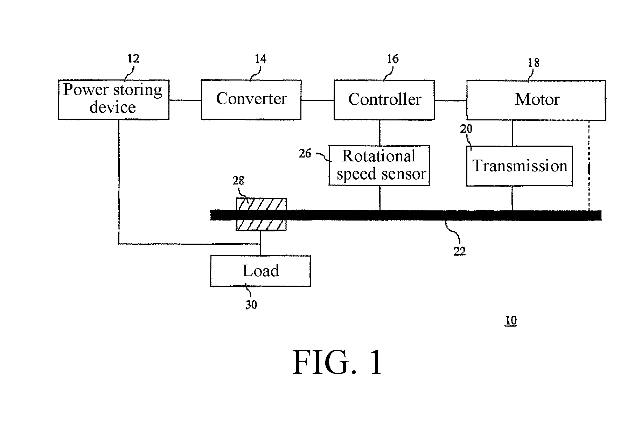

FIG. 1 is a system architecture diagram of a closed energy combined cycle system according to the present invention. In FIG. 1, the closed energy combined cycle system 10 includes a power storing device 12, a converter 14, a controller 16, a motor 18, a transmission 20, a transmission shaft 22, a rotational speed sensor 26, a generator 28, and a load 30. The power storing device 12, the converter 14, the controller 16, and the rotational speed sensor 26 form the power supply mechanism of the embodiment; the motor 18 forms the driving device of the embodiment; and the generator 28 forms the power generation device of the embodiment. In another embodiment, the closed energy combined cycle system may not include the transmission.

The power storing device 12 is used for providing power of a low voltage. The power storing device 12 may be a lead acid battery, a nickel-metal hydride battery, or a lithium battery, and so on.

The converter 14 is used for converting the low voltage of the power storing device 12 into a high voltage, and sending the converted power to the controller 16. The converter 14 may be a DC-to-DC converter or a DC-to-AC converter.

The controller 16 receives the power sent by the converter 14 and outputs a control power to the motor 18, so as to control operation of the motor 18, for example, controlling a rotational speed of the motor 18. The controller 16 may be an AC server, a DC server, or a frequency converter, and the motor 18 may be an AC motor, a DC motor, a magnetic levitation motor, or a permanent magnetic motor.

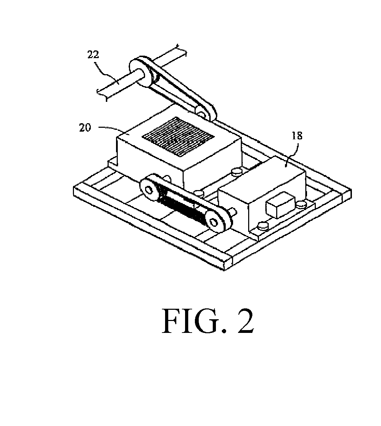

FIG. 2 is a schematic view of connection relations of a transmission, a motor, and a transmission shaft according to the present invention. In FIG. 1 and FIG. 2, the transmission 20 is disposed between the motor 18 and the transmission shaft 22. The transmission 20 changes the high rotational speed of the motor 18 into a different rotational speed, so as to rotate the transmission shaft 22. The transmission 20 is capable of raising or lowering the high rotational speed of the motor 18 (in the embodiment, the transmission 20 makes the rotational speed of the transmission shaft 22 higher than the high rotational speed of the motor 18.). The transmission 20 may be a segment transmission or a CVT. In another embodiment, it is unnecessary to dispose the transmission 20 between the motor 18 and the transmission shaft 22, and the motor 18 directly rotates the transmission shaft 22 (as shown by a dashed line in FIG. 1).

In FIG. 1 and FIG. 2, when the transmission 20 rotates the transmission shaft 22 (in another embodiment, the motor 18 directly rotates the transmission shaft 22, as shown by the dashed line in FIG. 1) to rotate the generator 28, the generator 28 operates at a rotational speed higher than the high rotational speed of the motor 18 (in another embodiment, the generator 28 operates at a rotational speed the same as the high rotational speed of the motor 18.). The transmission shaft 22 rotates the generator 28, so as to enable the generator 28 to generate power. The power generated by the generator 28 is supplied to the load 30, and is used for charging the power storing device 12. The generator 28 may be a DC generator or an AC generator.

The rotational speed sensor 26 senses the rotational speed of the transmission shaft 22, generates a rotational speed signal, and sends the rotational speed signal sensed by the rotational speed sensor 26 to the controller 16. The controller 16 controls the rotational speed of the motor 18 according to the received rotational speed signal, namely indirectly controlling the rotational speed of the transmission shaft 22.

Referring to FIG. 1 and FIG. 2, the operation method of the closed energy combined cycle system 10 according to the embodiment is described hereinafter.

Firstly, the converter 14 converts the low voltage of the power storing device 12 into the high voltage and sends the power of the high voltage to the controller 16.

The controller 16 receives the power of the high voltage and generates the control power according to the rotational speed signal of the rotational speed sensor 26, and outputs the control power to the motor 18, so as to control the operation of the motor 18 (for example, controlling the rotational speed of the motor 18).

When the transmission shaft 22 is still or the rotational speed thereof does not reach the high rotational speed determined by the controller 16, the rotational speed sensor 26 senses the stillness or the low rotational speed of the transmission shaft 22 and generates accordingly the rotational speed signal, and sends the rotational speed signal to the controller 16. The rotational speed signal of the stillness or the low rotational speed is lower than the value of the high rotational speed predetermined by the controller 16. Therefore, the controller 16, for example, raises the control power output to the motor 18, so as to raise the rotational speed of the motor 18. The motor 18 at a raised rotational speed drives the transmission 20 to rotate the transmission shaft 22, thereby raising the rotational speed of the transmission shaft 22 (in another embodiment, the motor 18 directly rotates the transmission shaft 22, as shown by the dashed line in FIG. 1.). The above steps are repeated, so that the rotational speed of the transmission shaft 22 is gradually adjusted to reach the high rotational speed determined by the controller 16.

The transmission 20 is disposed between the motor 18 and the transmission shaft 22, so that the rotational speed of the transmission shaft 22 is in a multiple relation with the high rotational speed of the motor 18 through the transmission function of the transmission 20. The rotational speed of the transmission shaft 22 is raised, and the transmission shaft 22 at the high rotational speed rotates the generator 28, so that the generator 28 has a higher power generation efficiency. Furthermore, as the motor 18 and the generator 28 operate at the high rotational speed, the loss due to rotation of the motor 18 and rotation of the generator 28 is reduced. The transmission shaft 22 at the high rotational speed rotates the generator 28, so as to enable the generator 28 to generate the power. The power generated by the generator 28 is supplied to the load 30 and is used for charging the power storing device 12.

The power storing device 12 supplies the control power to the motor 18 through the converter 14 and the controller 16, and the generator 28 generates the power, so as to charge the power storing device 12. In this way, in the closed energy combined cycle system 10, energy is renewable since the electric energy is converted into the kinetic energy and the kinetic energy is converted into the electric energy.

In the embodiment, the closed energy combined cycle system 10 is applicable to power supply equipment of vehicles, ships, airplanes, or residential communities. The motor 18 drives the generator 28 at the high rotational speed, so that the closed energy combined cycle system 10 has higher power generation efficiency.

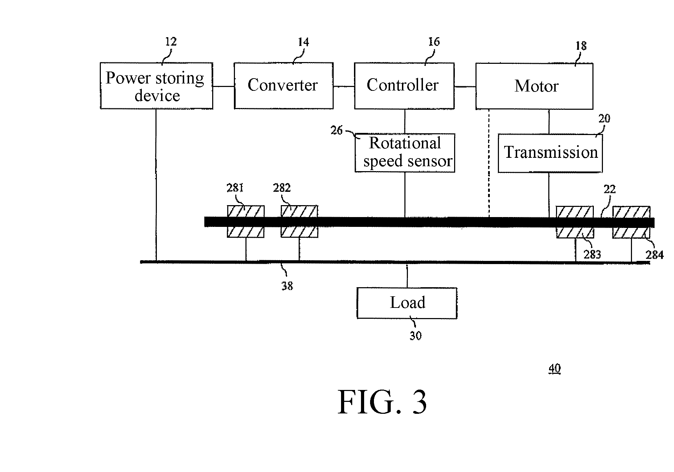

FIG. 3 is a system architecture diagram of another closed energy combined cycle system according to the present invention. The difference between the structure of the closed energy combined cycle system 40 in FIG. 3 and the structure of the closed energy combined cycle system 10 in FIG. 1 lies in that in FIG. 3, the transmission shaft 22 rotates a plurality of generators 281, 282, 283, and 284, the power generated by the generators 281, 282, 283, and 284 is sent to a bus 38, and the power storing device 12 and the load 30 obtain the power from the bus 38.

The operation method of the closed energy combined cycle system 40 in FIG. 3 is the same as the operation method of the closed energy combined cycle system 10 in FIG. 1, and therefore, description thereof is herein omitted.

The present invention provides a closed energy combined cycle system. The motor and the generator thereof operate at the high rotational speed, so that the energy loss in the operation of the motor or the generator may be reduced, and the power generation efficiency of the generator may be improved, so as to greatly improve the overall efficiency of the closed energy combined cycle system. Therefore, when the generator generates a few electric energies, resources used by the motor for driving the generator are reduced, thereby effectively reducing consumption of earth resources and effectively eliminating problems of earth environmental protection.

The present invention is described with reference to preferred embodiments and accompanying drawings, but is not intended to limit the present invention. Any modifications, replacements and improvements made by persons of ordinary skills in the art to the content and shape of the specific embodiments shall not depart from the scope of the present invention as defined by the appended claims.

## Claims

1. A closed energy combined cycle system, comprising:
a power supply mechanism, used for providing a high voltage;
a driving device, wherein operation of the driving device is controlled by the high voltage provided by the power supply mechanism; and
at least one power generation device, wherein the driving device rotates the at least one power generation device to generate power through a transmission shaft, and the power generated by the at least one power generation device is supplied to the power supply mechanism and a load,
wherein the driving device rotates the transmission shaft at a high rotational speed and the transmission shaft rotates the at least one power generation device to generate the power.

2. The closed energy combined cycle system according to claim 1, wherein the power supply mechanism comprises:
a power storing device, used for providing a low voltage, wherein the at least one power generation device charges the power storing device;
a converter, used for converting the low voltage provided by the power storing device into the high voltage;
a controller, used for receiving the high voltage provided by the converter, so as to control the operation of the driving device; and
a rotational speed sensor, used for sensing the rotational speed of the transmission shaft, so as to generate a rotational speed signal, wherein the controller controls the rotational speed of the driving device according to the rotational speed signal of the rotational speed sensor.

3. The closed energy combined cycle system according to claim 2, wherein the power storing device is one of a lead acid battery, a nickel-metal hydride battery, and a lithium battery.

4. The closed energy combined cycle system according to claim 2 or 3, wherein the converter is one of a direct current (DC)-to-DC converter and a DC-to-alternating current (AC) converter.

5. The closed energy combined cycle system according to claim 2, 3 or 4, wherein the controller is one of an AC server, a DC server, and a frequency converter.

6. The closed energy combined cycle system according to any preceding claim, wherein the driving device is one of an AC motor, a DC motor, a magnetic levitation motor, and a permanent magnetic motor.

7. The closed energy combined cycle system according to any preceding claim, further comprising a transmission, disposed between the driving device and the transmission shaft, and used for changing the rotational speed of the driving device rotating the transmission shaft.

8. The closed energy combined cycle system according to claim 7, wherein the transmission is a continuously variable transmission (CVT) or a segment transmission.

9. The closed energy combined cycle system according to any preceding claim, wherein the at least one power generation device is one of an AC generator and a DC generator.

10. An operation method of a closed energy combined cycle system, wherein the closed energy combined cycle system comprises a power supply mechanism, a driving device, and at least one power generation device, the operation method comprising:
the power supply mechanism providing a high voltage to control operation of the driving device;
the driving device rotating a transmission shaft at a high rotational speed;
the transmission shaft rotating the at least one power generation device to generate power; and
supplying the power generated by the at least one power generation device to the power supply mechanism and a load.

11. The operation method according to claim 10, wherein a converter of the power supply mechanism converts a low voltage of a power storing device of the power supply mechanism into the high voltage.

12. The operation method according to claim 10 or 11, wherein a rotational speed sensor of the power supply mechanism senses a rotational speed of the transmission shaft and generates a rotational speed signal, and a controller of the power supply mechanism controls the operation of the driving device according to the rotational speed signal of the rotational speed sensor.

13. The operation method according to claim 10, 11 or 12, wherein a transmission of the closed energy combined cycle system changes the rotational speed of the driving device rotating the transmission shaft.

14. The operation method according to any of claims 10 to 13, wherein the at least one power generation device charges a power storing device of the power supply mechanism.
